# EUROPÄISCHE PATENTSCHRIFT

(11) **EP 1 573 887 B1**
(45) Veröffentlichungstag und Bekanntmachung des Hinweises auf die Patenterteilung: **04.06.2008**
(21) Anmeldenummer: 03788800.5
(22) Anmeldetag: 21.11.2003
(51) Int. Cl.: H02K 55/04, H02K 3/46

(54) **ELEKTRISCHE MASCHINE MIT BANDAGIERTER, TIEFZUKÜHLENDER WICKLUNG**
ELECTRIC MACHINE COMPRISING A WRAPPED COIL THAT IS TO BE DEEP-FROZEN
MACHINE ELECTRIQUE DOTEE D'UNE BOBINE A BANDAGE ET A REFROIDIR A BASSE TEMPERATURE

(30) Priorität: 19.12.2002 DE 10259822
(43) Veröffentlichungstag der Anmeldung: 14.09.2005
(73) Patentinhaber: SIEMENS AKTIENGESELLSCHAFT, 80333 München (DE)
(72) Erfinder: FRANK, Michael, 91080 Uttenreuth (DE); KÜHN, Adolf, 90552 Röthenbach (DE); MASSEK, Peter, 91301 Forchheim (DE); VAN HASSELT, Peter, 91058 Erlangen (DE)
(86) Internationale Anmeldenummer: PCT/DE2003/003858
(87) Internationale Veröffentlichungsnummer: WO 2004/057741

(56) Entgegenhaltungen:
- DE-A- 19 943 783
- GB-A- 1 316 173
- PATENT ABSTRACTS OF JAPAN Bd. 1, Nr. 98 (E-41), 31. August 1977 (1977-08-31) -& JP 52 032503 A (HITACHI LTD), 11. März 1977 (1977-03-11)
- PATENT ABSTRACTS OF JAPAN Bd. 3, Nr. 5 (E-084), 18. Januar 1979 (1979-01-18) -& JP 53 132711 A (HITACHI LTD), 18. November 1978 (1978-11-18)

## Beschreibung

Die Erfindung bezieht sich auf eine elektrische Maschine mit einem um eine Rotationsachse drehbaren Läufer, der eine auf Tieftemperatur zu kühlende, insbesondere supraleitende Wicklung enthält, die von einem Fixierungsmittel mit einer Bandage umhüllt ist. Ein Läufer einer entsprechenden Maschine ist aus der DE 199 43 783 A1 zu entnehmen.

Zwei- oder mehrpolige Wicklungen elektrischer Maschinen können gleichmäßig am Außenumfang eines Wicklungsträger bzw. eines sogenannten Polkerns um eine gemeinsame Achse angeordnet und von Gleichstrom mit abwechselndem Stromumlaufsinn durchflossen werden. Diese Wicklungen können dabei auf der Außenseite des Wicklungsträgers aufgebracht oder in nutenartigen Aussparungen untergebracht sein.

Eine entsprechende elektrische Maschine mit einem solchen mehrpoligen Wicklungsaufbau ist der EP 0 805 545 A1 zu entnehmen. Jeder Einzelpol dieser Maschine ist durch eine Teilwicklung vom Rennbahntyp erzeugt, deren supraleitende Leiter um einen Eisenkern gewickelt sind und sich in einem eigenen Kryostaten befinden. Als Supraleitermaterial für die Leiter ist insbesondere Nb₃Sn vorgesehen.

Seit 1987 sind metalloxidische Supraleitermaterialien bekannt geworden, die Sprungtemperaturen von über 77 K aufweisen und deshalb auch als Hoch-T_{c}-Supraleitermaterialien oder HTS-Materialien bezeichnet werden. Man versucht deshalb, entsprechende Wicklungen auch mit solchen Leitern zu erstellen. Es zeigt sich jedoch, dass bisher bekannte HTS-Leiter nur eine verhältnismäßig geringe Stromtragfähigkeit in Magnetfeldern mit Induktionen im Tesla-Bereich besitzen, wie sie bei elektrischen Maschinen auftreten können. Dies macht es erforderlich, dass aus solchen Leitern erstellte Wicklungen trotz der verhältnismäßig hohen Sprungtemperaturen ihrer Leiter dennoch auf einem unterhalb von 77 K liegenden Temperaturniveau gehalten werden müssen.

Aus der eingangs genannten DE 199 43 783 A1-Schrift ist ein Läufer mit einer entsprechenden mehrpoligen Wicklung unter Verwendung entsprechender HTS-Leiter zu entnehmen. Dieser Läufer weist einen Wicklungsträger mit jeweils um 90° in Umfangsrichtung versetzt angeordneten Teilspulen auf, die die vier Einzelpole des Läufers bilden. Die Teilspulen bestehen dabei jeweils aus einem Stapel von ebenen Spulenelementen vom Rennbahntyp, wobei jedes Spulenelement aus bandförmigen HTS-Leitern erstellt ist. Die Teilspulen sind dabei so angeordnet, dass ihre Außenkonturen an eine gemeinsame Zylindermantelfläche des Trägerkörpers bzw. Polkerns zumindest weitgehend angepasst sind.

Entsprechende HTS-Läuferwicklungen werden vorteilhaft so erstellt, dass ihre Spulen zunächst vorgefertigt und dann geprüft werden. Diese unter Umständen schon zu größeren Einheiten kombinierten Spulen oder Spulenpakete werden anschließend auf die Pole des sie tragenden Läuferkörpers montiert. Im Betrieb sind sie erheblichen Fliehkräften auf Grund von Rotation sowie magnetischen Kräften ausgesetzt. Diese Kräfte versuchen, die Spulen nach außen zu ziehen. Da eine Bewegung der Wicklung und insbesondere des supraleitenden Materials unerwünscht ist, muss eine geeignete Fixierung erfolgen. Gemäß der eingangs genannten US-A-Schrift kann als entsprechendes Fixierungsmittel ein Hüllrohr oder eine Bandage aus einem glasfaserverstärkten Kunststoff vorgesehen sein. Bei großen Kräften reicht jedoch die Festigkeit und Steifigkeit des faserverstärkten Kunststoffmaterials im Allgemeinen nicht mehr aus, so dass dann üblicherweise Hüllrohre (vgl. US 4 060 743 A.) oder Hüllrohrstücke bzw. -ringe (vgl. DE 32 12 416 A1) aus Metall als Fixierungsmittel vorgesehen werden. Denn Metalle weisen in der Regel E-Module auf, die ca. 5 bis 10 mal größer als der von faserverstärktem Kunststoff sind. Dabei ist für eine Ausbildung eines entsprechenden Metallmantels z.B. eine Umwicklung eines Spulenkörpers mit einem Stahlband analog zu einem Faserband bekannt (vgl. WO 00/49703 A). Da aber ein Metallband im Gegensatz zu einem Faserwerkstoff schon während des Wickelns eine hohe Quersteifigkeit aufweist, ist eine derartige Metallbandage aufwendig in der Herstellung.

Aufgabe der vorliegenden Erfindung ist es deshalb, für die Maschine mit den eingangs genannten Merkmalen ein rohrförmiges, die Wicklung umhüllendes Fixierungsmittel anzugeben, das eine einfache und kostengünstige Herstellung des Fixierungsmittels erlaubet und dennoch die zu fordernde hinreichende mechanische Festigkeit zur Aufnahme der auftretenden Kräfte gewährleistet.

Diese Aufgabe wird für eine Maschine mit den eingangs genannten Merkmalen erfindungsgemäß dadurch gelöst, dass
- das Fixierungsmittel in axialer Richtung gesehen eine sich von einem kleineren auf einen größeren Außendurchmesser erweiternde Außenkontur seiner Bandage aufweist
und
- die Bandage von mehreren hintereinander angeordneten Sicherungsringen mit jeweils dem Außendurchmesser der Außenkontur angepasstem Innendurchmesser kraftschlüssig umgeben ist.

Bei der erfindungsgemäßen Ausgestaltung der Maschine wird also darauf verzichtet, die notwendige Gesamtsteifigkeit der Fixierungsmittel durch ein einziges Bauteil zu erreichen. Vielmehr ist vorgesehen, um die Wicklung ( = Gesamtheit aller Wicklungsspulen), beispielsweise auf dem Polkern mit den einzelnen Spulen, eine faserverstärkte Kunststoffbandage aufzubringen. Deren Außenkontur ist zumindest im Bereich der Wicklung zumindest annähernd konisch gestaltet, wobei vorteilhaft an die Präzision dieses Konus' keine zu hohen Anforderungen zu stellen sind. Die auf diesen Konus zur mechanischen Verstärkung zusätzlich aufzubringenden Sicherungs- oder Stützringe bestehen nicht aus einem kompletten Zylinder, sondern aus einzelnen ringförmigen Elementen mit unterschiedlichen, an den jeweiligen Ort ihrer Positionierung angepassten Innendurchmessern. Auch diese Durchmesser müssen nicht besonders präzise eingehalten werden; es genügt, wenn sichergestellt ist, dass die Ringe im Durchmesser auf dem Konus an unterschiedlichen Stellen zu liegen kommen. Dabei ist es auch nicht erforderlich, dass die Sicherungs- oder Stützringe bündig aneinander liegen; sie können also, ähnlich wie die Metallreifen um ein Holzfass, auch untereinander in axialer Richtung beabstandet sein. Die genaue Größe dieses Abstandes hängt von der geforderten Steifigkeit der Wicklung in axialer Richtung und der maximal zulässigen Aufweitung zwischen den einzelnen Ringen ab. Das Material und der Querschnitt der Ringe werden unter dem Gesichtspunkt der geforderten Stützfunktion gewählt.

Weitere vorteilhafte Ausgestaltungen der Maschine nach der Erfindung gehen aus den abhängigen Ansprüchen hervor.

So kann der Läufer einen die Wicklung aufnehmenden Polkern aufweisen, der gegebenenfalls aus metallischem Material besteht. Der Polkern kann zum einen zur magnetischen Flussführung herangezogen werden und zum anderen die mechanische Fixierung der Wicklung in Umfangsrichtung verbessern.

Vorteilhaft wird die Bandage aus einem faserverstärkten Kunststoffband erstellt, vorzugsweise gewickelt. Zu einer weiteren Verfestigung der Bandage kann vorteilhaft ein aushärtbarer Kunststoff vorgesehen sein, der eine starre Rohrform der Bandage gewährleistet.

Die Sicherungsringe können aus glasfaserverstärktem Kunststoff oder aus Metall bestehen. Sie sind als vorgefertigte Elemente kostengünstig zu erstellen.

Selbstverständlich ist es auch möglich, dass die Außenkontur der Bandage die Gestalt eines Doppel-Konus' mit sich jeweils nach den axialen Läuferseiten hin verjüngendem Außendurchmesser aufweist. Die zusätzlichen Stütz- oder Sicherungsringe werden dann jeweils von beiden Seiten her auf die Bandage aufgezogen.

Die Wicklung für die erfindungsgemäße Maschine ist aus bekannten, tiefzukühlenden Leitern in bekannter Weise zu erstellen. Vorteilhaft enthält die Wicklung Hoch-Tc-Supraleitermaterial, das insbesondere auf einem Temperaturniveau unter 77 K zu halten ist. Die Stromtragfähigkeit dieses Materials ist dementsprechend hoch.

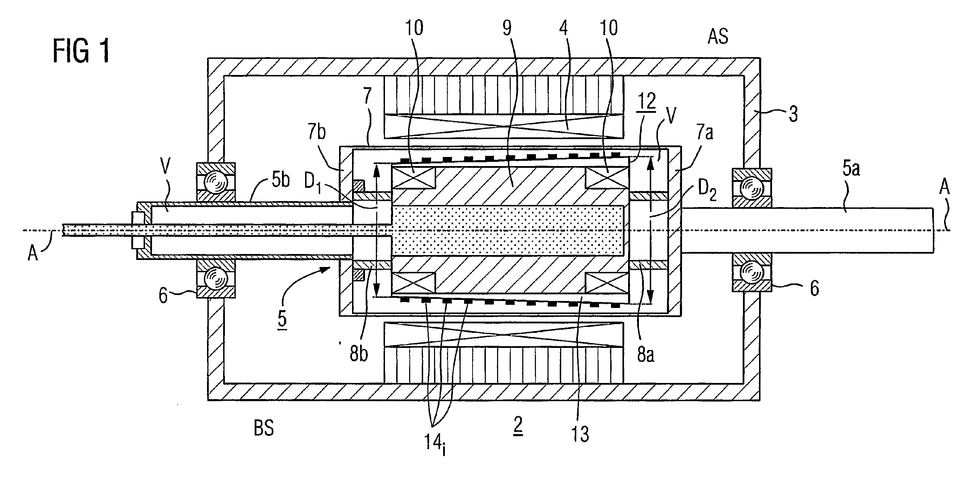

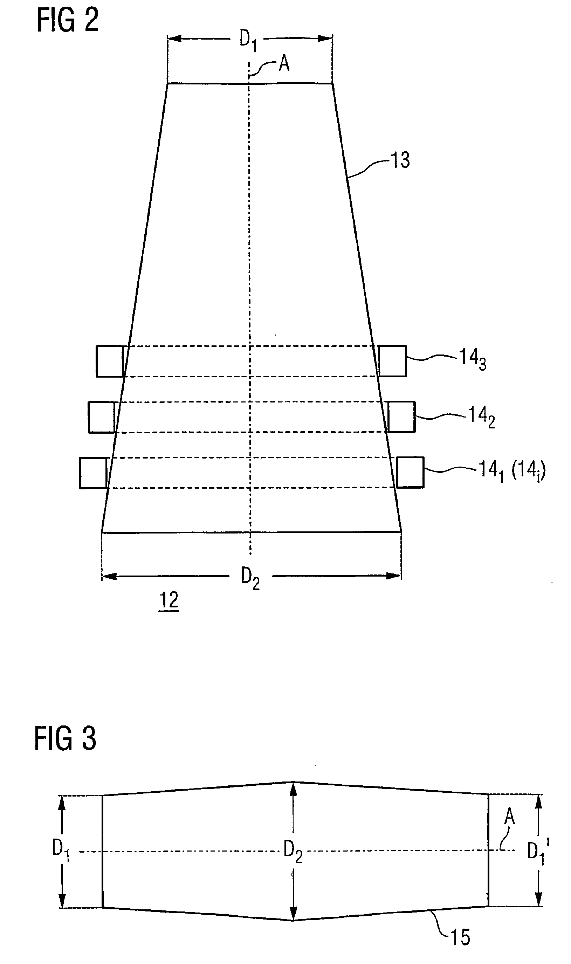

Die Erfindung wird nachfolgend an Hand eines bevorzugten Ausführungsbeispieles noch weiter erläutert, wobei auf die Zeichnung Bezug genommen wird. Dabei zeigen jeweils schematisch als Längsschnitt
- deren Figur 1: eine Maschine mit erfindungsgemäßem Fixierungsmittel,
- deren Figur 2: das erfindungsgemäß gestaltete Fixierungsmittel dieser Maschine
und
- deren Figur 3: eine besondere Bandage eines Fixierungsmittels. In den Figuren sind sich entsprechende Teile mit denselben Bezugszeichen versehen.

Bei der nachfolgend angedeuteten Ausführungsform der Maschine kann es sich insbesondere um einen Synchron-Motor, einen Generator oder eine beliebige andere Maschine handeln. Dabei sind selbstverständlich spezielle Anwendungs- und Einsatzgebiete entsprechender Maschinen wie für hohe Drehzahlen, kompakte Antriebe z.B. von Schiffen und für sogenannte Off-Shore-Einrichtungen wie z.B. Bohrplattformen möglich.

Die erfindungsgemäße Maschine umfasst eine rotierende, tiefzukühlende Wicklung, für deren Leiter insbesondere auch Supraleiter in Frage kommen. Prinzipiell ist für solche Leiter eine Verwendung von metallischem LTS-Material (Niedrig T_{c}-Supraleitermaterial) oder insbesondere oxidischem HTS-Material (Hoch-T_{c}-Supraleitermaterial) möglich. Letzteres Material wie z.B. das (Bi, Pb)₂Sr₂Ca₂Cu₃Oₓ sei für das nachfolgende Ausführungsbeispiel ausgewählt. Das Material kann aus Gründen einer hohen Stromtagfähigkeit im Betrieb deutlich unter seiner Sprungtemperatur T_{c}, beispielsweise auf 40 bis 50 K, gehalten werden. Die Wicklung kann aus einer einzigen Spule oder einem System von Spulen in einer 2-, 4- oder sonstigen mehrpoligen Anordnung bestehen. Der prinzipielle Aufbau einer solchen Maschine geht aus Figur 1 hervor, wobei von bekannten Ausführungsformen solcher Maschinen ausgegangen wird (vgl. z.B. den vorstehend genannten Stand der Technik oder die WO 02/50985 A).

Die allgemein mit 2 bezeichnete Maschine umfasst ein feststehendes, auf Raumtemperatur befindliches Maschinenaußengehäuse 3 mit einer Ständerwicklung 4 darin. Innerhalb dieses evakuierbaren Außengehäuses und von der Ständerwicklung umschlossen ist ein Läufer 5 drehbar um eine Rotationsachse A in Lagern 6 gelagert, dessen Läuferwelle auf der sogenannten Antriebsseite AS der Maschine einen in dem entsprechenden Lager gehaltenen, massiven axialen Läuferwellenteil 5a umfasst. Der Läufer 5 weist ein als Vakuumgefäß gestaltetes Außengehäuse 7 auf, in dem ein Wicklungsträger 9 oder Polkern mit einer HTS-Wicklung 10 gehaltert ist. Hierzu dient auf der Antriebsseite AS eine (erste), starre, rohrförmige Verbindungseinrichtung 8a zwischen dem Wicklungsträger 9 und einem scheibenförmigen, mit dem Läuferwellenteil 5a fest verbundenen scheibenförmigen Seitenteil 7a des Läuferaußengehäuses. Über die starre Verbindungseinrichtung 8a erfolgt auch eine Drehmomentübertragung. Auf der der Antriebsseite AS gegenüberliegenden, mit BS bezeichneten Betriebsseite, d.h. der Nicht-Antriebsseite, ist eine weitere Verbindungseinrichtung 8b zwischen dem Wicklungsträger 9 und einem scheibenförmigen Seitenteil 7b des Läuferaußengehäuses 7 angeordnet.

In Figur 1 ist ferner auf der antriebsabgewandten Seite BS ein hohlzylindrischer Wellenteil 5b angedeutet, der an seiner dem Läuferaußengehäuse 7 zugewandten Seite mit dessen scheibenförmigem Seitenteil 7b starr verbunden ist. Über diesen in einem Lager 6 gelagerten Wellenteil erfolgt unter anderem eine Zufuhr eines erforderlichen Kühlmittels K zur Kühlung der supraleitenden Wicklung 10 von außerhalb der Maschine. Ein den Wicklungsträger 9 mit der supraleitenden Wicklung 10 umschließendes Vakuum ist mit V bezeichnet. Dieses zur thermischen Isolation dienende Vakuum ist insbesondere zwischen dem warmen Läuferaußengehäuse 7 und dem kalten Wicklungsträger 9 vorhanden.

Erfindungsgemäß soll die z.B. in Nuten in den Wicklungsträger 9 eingebrachte Wicklung 10 von einem besonderen Fixierungsmittel 12 auf dem Träger 9 gegen Bewegungen unter Krafteinwirkung gesichert sein. Hierzu wird auf den Träger mit der Wicklung eine rohrförmige, faserverstärkte Kunststoffbandage 13 in an sich bekannter Weise aufgebracht. Diese Bandage kann zur Versteifung gegebenenfalls noch mit einem aushärtbaren Kunststoff versehen sein. Ihre Außenkontur soll schon beim Aufbringen oder nachträglich z.B. durch entsprechende Überarbeitung eine sich wenigstens annähernd konisch verjüngende Form erhalten, so dass sie sich in axialer Richtung gesehen von einem kleineren Außendurchmesser D₁ auf einen größeren Außendurchmesser D₂ erweitert. Die Erweiterung kann dabei in axialer Richtung gesehen kontinuierlich oder auch abgestuft geschehen. Auf diese Weise können von der Seite mit dem kleineren Außendurchmesser D₁ her bei der Montage des Läufers zusätzliche Stütz- oder Sicherungsringe 14ᵢ über die Bandage 13 geschoben werden. Der Innendurchmesser der einzelnen Ringe ist an den Außendurchmesser der Bandage an der Stelle, wo sich der jeweilige Sicherungsring im montierten Zustand befinden soll, angepasst, um dort einen Kraftschluss zwischen dem Ring und der Bandage zu erzeugen. Gegebenenfalls kann mit diesen Ringen an den betreffenden Stellen noch eine radiale Vorspannkraft auf die Bandage hervorgerufen werden. Die Sicherungsringe brauchen, wie in der Figur angedeutet ist, nicht bündig aneinander zuliegen, sondern können je nach Anforderungen an die Steifigkeit auch untereinander beabstandet sein.

Figur 2 zeigt in vergrößerter Darstellung die Bandage 13 mit drei Stützringen 14₁ bis 14₃. Einer größeren Anzahl entsprechender Ringe 14ᵢ. Dabei ist aus Gründen der Verdeutlichung die Konizität der Bandage übertrieben stark veranschaulicht. Die Ringe bestehen aus einem insbesondere nicht-magnetischen Metall wie einem Edelstahl oder aus einem Kunststoff-Faserverbundmaterial. Ihre Querschnittsform braucht dabei, wie dargestellt, nicht unbedingt quadratisch zu sein. Auch rechteckige Querschnittsformen sind möglich, so dass die Ringe dann rohrstückartig oder reifenartig ausgebildet sind. Ebenso gut sind auch runde Querschnittsformen geeignet, die zudem noch ein leichteres Überstreifen der Ringe über die Bandage ermöglichen.

Bei dem vorstehenden Ausführungsbeispiel wurde davon ausgegangen, dass die Konizität der Außenkontur der Bandage dadurch erhalten wird, dass die Bandage von ihrer Außenseite entsprechend bearbeitet bzw. abgearbeitet wird. Selbstverständlich ist es auch möglich, die Außenseite des Trägerkörpers mit der in ihm angeordneten Wicklung konisch zu gestalten und dann diese Außenseite mit einer Bandage zu versehen, deren Dicke sich in axialer Richtung nicht ändert.

Selbstverständlich ist es auch möglich, eine Außenkontur des Fixierungsmittels in Form eines Doppel-Konus einzuplanen. D.h., der Außendurchmesser des Fixierungsmittels würde sich von einer Seite des Läufers her in axialer Richtung hin zur Läufermitte zunächst auf einen größeren Durchmesser erweitern und dann zur anderen Seite hin wieder abnehmen. In diesem Falle würden dann die Sicherungsringe von beiden Seiten des Läufers her aufzubringen sein. Ein entsprechendes Ausführungsbeispiel einer noch nicht mit Sicherungsringen versehenen Bandage geht aus Figur 3 hervor. Die mit 15 bezeichnete Bandage erweitert sich von einer Seite mit einem Durchmesser D₁ zu Mitte hin auf einen Durchmesser D₂ und verjüngt sich wieder auf einen Durchmesser D₁'. Die seitlichen Durchmesser D₁ und D₁' brauchen dabei nicht gleich groß zu sein.

## Patentansprüche

1. Elektrische Maschine mit einem um eine Rotationsachse drehbaren Läufer, der eine auf Tieftemperatur zu kühlende, insbesondere supraleitende Wicklung enthält, die von einem Fixierungsmittel mit einer Bandage umhüllt ist, **dadurch gekennzeichnet, dass** das Fixierungsmittel (12) in axialer Richtung gesehen eine sich von einem kleineren (D₁, D₁') auf einen größeren Außendurchmesser (D₂) erweiternde Außenkontur seiner Bandage (13, 15) aufweist und die Bandage von mehreren hintereinander angeordneten Sicherungsringen (14i) mit jeweils dem Außendurchmesser der Außenkontur angepasstem Innendurchmesser kraftschlüssig umgeben ist.

2. Maschine nach Anspruch 1, **dadurch gekennzeichnet, dass** der Läufer (5) einen Polkern bildet, der die Wicklung (10) aufnimmt.

3. Maschine nach Anspruch 1 oder 2, **dadurch gekennzeichnet, dass** die Bandage (13, 15) aus einem faserverstärkten Kunststoffband gewickelt ist.

4. Maschine nach Anspruch 3, **dadurch gekennzeichnet, dass** zusätzlich zu der Bandage (13, 15) ein aushärtbarer Kunststoff vorgesehen ist.

5. Maschine nach einem der vorangehenden Ansprüche, **dadurch gekennzeichnet, dass** die Sicherungsringe (14ᵢ) aus einem faserverstärkten Kunststoff oder aus Metall bestehen.

6. Maschine nach einem der vorangehenden Ansprüche, **dadurch gekennzeichnet, dass** die Außenkontur der Bandage (15) die Gestalt eines Doppel-Konus' mit sich jeweils nach den Läuferseiten hin verjüngendem Außendurchmesser aufweist.

7. Maschine nach einem der vorangehenden Ansprüche, **dadurch gekennzeichnet, dass** die tiefgekühlte Wicklung (10) Hoch-T_{c}-Supraleitermaterial enthält.

8. Maschine nach Anspruch 7, **dadurch gekennzeichnet, dass** die Wicklung (10) auf einem Temperaturniveau unter 77 K zu halten ist.

## Claims

1. Electric machine with a rotor, which can be rotated about a rotation axis, the rotor comprising a winding to be cooled to a low temperature, in particular a superconducting winding, which is wrapped by a fixing means with a tape binding, **characterised in that** the fixing means (12) has a tape binding (13, 15) with an external contour that widens from a smaller external diameter (D₁, D₁') to a greater external diameter (D₂) when viewed in the axial direction and the tape binding is surrounded in a friction-locked manner by several sequentially arranged securing rings (14i), having an internal diameter tailored respectively to the external diameter of the external contour.

2. Machine according to claim 1, **characterised in that** the rotor (5) forms a pole core to receive the winding (10).

3. Machine according to claim 1 or 2, **characterised in that** the tape binding is wound from a fibre-reinforced plastic tape.

4. Machine according to claim 3, **characterised in that** a hardenable plastic is provided in addition to the tape binding (13, 15).

5. Machine according to one of the preceding claims, **characterised in that** the securing rings (14ᵢ) consist of a fibre-reinforced plastic or of metal.

6. Machine according to one of the preceding claims, **characterised in that** the external contour of the tape binding (15) has the shape of a double cone with an external diameter that tapers respectively following the sides of the rotor.

7. Machine according to one of the preceding claims, **characterised in that** the winding (10), which is cooled to a low temperature, contains a high-T_{c} superconductor material.

8. Machine according to claim 7, **characterised in that** the winding (10) is to be kept at a temperature level below 77 K.

## Revendications

1. Machine électrique ayant un rotor tournant autour d'un axe de révolution et comportant un enroulement, notamment supraconducteur, à refroidir à une température basse et enveloppé d'un moyen d'immobilisation ayant un bandage, **caractérisée en ce que** le moyen (12) de fixation a, vu en direction axiale, un contour extérieur de son bandage (13, 15) qui s'élargit d'un diamètre extérieur assez petit (D₁, D₁') à un diamètre extérieur plus grand et le bandage est entouré à coopération de force de plusieurs anneaux (14i) de sécurité disposés les uns derrière les autres et ayant, respectivement, un diamètre intérieur adapté au diamètre extérieur du contour extérieur.

2. Machine suivant la revendication 1, **caractérisée en ce que** le rotor (5) forme un noyau polaire qui reçoit l'enroulement (10).

3. Machine suivant la revendication 1 ou 2, **caractérisée en ce que** le bandage (13, 15) est enroulé à partir d'un ruban de matière plastique renforcée par de la fibre.

4. Machine suivant la revendication 3, **caractérisée en ce qu'**il est prévu une matière plastique thermodurcissable en plus du bandage (13, 15).

5. Machine suivant l'une des revendications précédentes, **caractérisée en ce que** les anneaux (14i) de sécurité sont en une matière plastique renforcée par de la fibre ou en métal.

6. Machine suivant l'une des revendications précédentes, **caractérisée en ce que** le contour extérieur du bandage (15) a la forme d'un double cône ayant un diamètre extérieur se rétrécissant respectivement vers les côtés du rotor.

7. Machine suivant l'une des revendications précédentes, **caractérisée en ce que** l'enroulement (10) à refroidir à basse température comporte un matériau supraconducteur à T_{c} haute.

8. Machine suivant la revendication 7, **caractérisée en ce que** l'enroulement (10) doit être maintenu à un niveau de température inférieur à 77 K.
